## Europäisches Patentamt

## European Patent Office

## Office européen des brevets

(19)

(11) Veröffentlichungsnummer: **0 036 492**
**A1**

(12) **EUROPÄISCHE PATENTANMELDUNG**

(21) Anmeldenummer: **81101253.3**

(22) Anmeldetag: **21.02.81**

(51) Int. Cl.³: **G 03 B 23/06**

(30) Priorität: **21.03.80 DE 3010851**

(43) Veröffentlichungstag der Anmeldung: **30.09.81**
**Patentblatt 81/39**

(84) Benannte Vertragsstaaten: **CH FR GB LI**

(71) Anmelder: **Rollei-Werke Franke & Heidecke GmbH + Co KG, Salzdahlumer Strasse 196, D-3300 Braunschweig (DE)**

(72) Erfinder: **Hamm, Heinz, Militschstrasse 61, D-3300 Braunschweig (DE)**

(74) Vertreter: **Gramm, Werner, Prof. Dipl.-Ing. et al, Patentanwälte Gramm + Lins Theodor-Heuss-Strasse 2, D-3300 Braunschweig (DE)**

(54) **Rundmagazin.**

(57) Es wird ein aufrechtstehend arbeitendes Rundmagazin (1) beschrieben, das senkrecht zur Rotorachse symmetrisch befestigte Rotorlager (5,5') in einem Winkel von 120° bis minimal 30° zwecks besseren Toleranzausgleiches der Diarahmenhöhenposition (D) aufweist. Eine Reibungskraftverminderung ergibt sich durch Nylon-Rotorlager (5,5'), die durch schräg zur Umfangsbewegungsrichtung der Rotoraußenzylinderwanad (9) liegende Nuten (8) einen Selbstreinigungseffekt erzielen.

Patentanwälte
**Prof. Dipl.-Ing. Werner Gramm**
Dipl.-Phys. Edgar Lins
Theodor-Heuss-Straße 2
3300 Braunschweig

0036492

R O L L E I - W E R K E
Franke  &  Heidecke
GmbH & Co KG
Braunschweig

Braunschweig, den 20.2.1981

Anwaltsakte: 240-23 EP-1

## Rundmagazin

Die Erfindung betrifft ein Rundmagazin für Diarahmen mit einem Stator und einem Rotor sowie einem Zahnrad und einer Zahnung zum schrittweisen Drehen des Rotors mittels eines Diaschiebers.

In zahlreichen Ausführungsformen sind aufrechtstehend arbeitende Rundmagazine bekannt, die konstruktiv nur enge Toleranzen zwischen Rotor und Rotorlagerung - bezüglich der Diarahmenhöhenposition zum Diaschieber für einwandfreies Funktionieren des Diarahmenwechsels zulassen, zudem sind bei den mit Diarahmen gefüllten Rund-Magazinen erhebliche Bewegungskräfte erforderlich.

Der Erfindung liegt daher die Aufgabe zugrunde, ein Rundmagazin der eingangs genannten Art zu schaffen, das in konstruktiv einfacher Weise eine maßgenaue, reibungsarme und nahezu wartungsfreie Lagerung des Rotors aufweist.

Diese Aufgabe wird erfindungsgemäß dadurch gelöst, daß der Stator senkrecht zur Rotorachse symmetrisch befestigte Rotorlager in einem Winkel von weniger als $120^{\circ}$ bis minimal $30^{\circ}$ aufweist. Damit ergibt sich aus geometrischen und materialtechnischen Gründen vorteilhaft ein maßgenauerer Tolerenzbereich zwischen Rotor und Rotorlagerung bzw. zwischen der Diarahmenhöhenposition und dem Diaschieber. Diese Art der Rotorlagerung gestattet ein einwandfreieres Funktionieren des Diarahmenwechsels als

- 2 -

0036492

die bekannten Rotorlagerungen mit einem Winkel von 120°.

Ein weiteres Merkmal der Erfindung ist darin zu erblikken, daß der Stator Rotorlager mit eingebrachten Nuten schräg zur Umfangsbewegung der Rotoraußenzylinderwand aufweist und dadurch in vorteilhafter Weise ein Selbstreinigungseffekt erzielt wird.

Eine weitere Ausgestaltung der Erfindung ergibt sich dadurch, daß der Stator Rotorlager aus Nylon aufweist, wobei durch das Material in vorteilhafter Weise ein Selbstschmiereffekt und damit eine Reibungsverminderung erzielt wird, so daß vorteilhaft ein kleinerer Antriebsmotor Verwendung finden kann.

In einer anderen Ausgestaltung der Erfindung weist der Stator Polytetrafluoräthylen-beschichtete Rotorlager auf, wodurch die Rotorlager vorteilhaft aus beliebigem Material bestehen können, wobei ein zusätzlich erhöhter Selbstschmiereffekt und damit eine weitere Reibungsverminderung gegenüber Nylon-Rotorlager erzielt wird.

In einer besonderen Ausgestaltung der Erfindung weist der Stator Polytetrafluoräthylen-beschichtete Innenwände auf, die vorteilhaft den Reibungswiderstand zwischen den im Rotor befindlichen Diarahmen und den Statorinnenwänden vermindern.

Eine weitere Ausgestaltung der Erfindung ergibt sich dadurch, daß der Stator und die Statorlager einteilig ausgebildet sind und damit kostengünstig in einem Spritzteil herstellbar sind.

- 3 -                                    0036492

Ein Ausführungsbeispiel der Erfindung ist in der Zeichnung dargestellt und wird im folgenden näher beschrieben. Es zeigen

Fig. 1    ein Rundmagazin in senkrecht zur Rotorachse geschnittener Darstellung,

Fig. 2    ein Rotorlager mit Nuten in perspektivischer Darstellung.

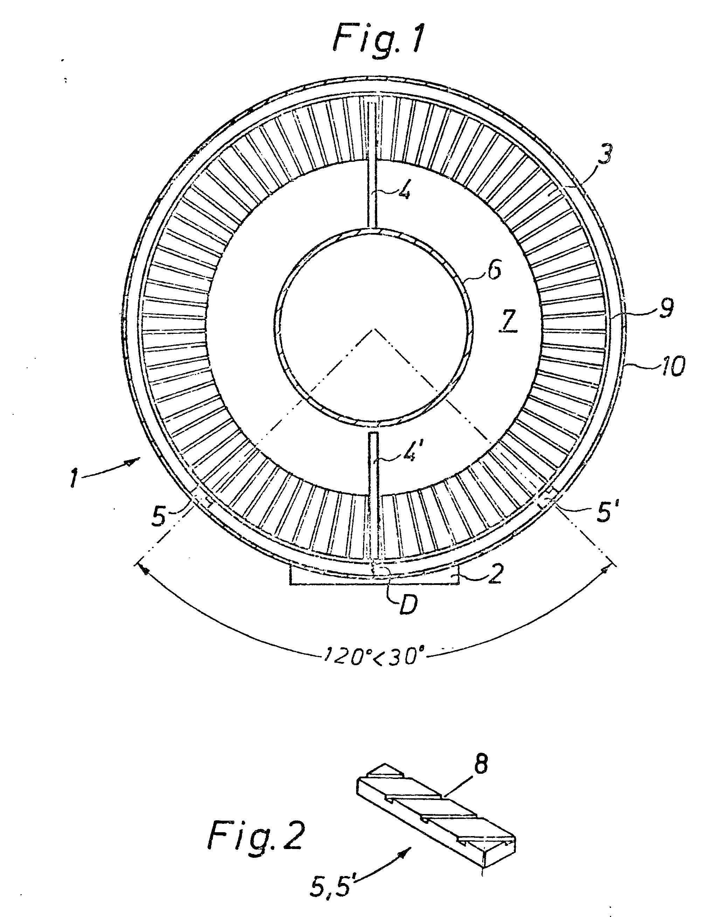

Fig. 1 zeigt ein Rundmagazin 1, bestehend aus einem Stator 2, einem Rotor 3 und einer nicht dargestellten Transporteinrichtung für das schrittweise Drehen des Rotors 3 mittels eines Diaschiebers sowie zwecks schematischer Darstellung nur einen oberen und unteren Diarahmen 4, 4'. Aus der Fig. 1 wird deutlich, daß die in einem Winkel von weniger als $120^{o}$ bis minimal $30^{o}$ befindlichen Rotorlager 5, 5' sich in der Toleranz der Diarahmenhöhenposition D weniger auswirken als entsprechende herkömmliche Rotorlager 5, 5' mit einer $120^{o}$-Anordnung.

Einen großen Anteil auf den Gesamtreibungswiderstand haben die auf der oberen Hälfte der Statorinnenzylinderwand 6 liegenden Diarahmen 4, 4' sowie die Rotorlager 5, 5'. Einen weiteren Anteil zum Gesamtreibungswiderstand geht von der Diarahmenreibung an der Statorwand 7 aus. Aus diesem Grunde ergibt sich ein sehr vorteilhafter Gesamtreibungswiderstand durch Polytetrafluoräthylen-beschichtete Innenflächen des Stators, nämlich der Statorinnenzylinderwand 6 und der Statorwand 7 sowie der Rotorlager 5, 5'.

Fig. 2 zeigt ein Rotorlager 5, 5' als eine Ausgestaltung der Erfindung, wobei durch die schräg eingebrachten Nuten 8 ein Selbstreinigungseffekt durch Scherung entsteht.

0036492

**Patentanwälte**
**Prof. Dipl.-Ing. Werner Gramm**
Dipl.-Phys. Edgar Lins
Theodor-Heuss-Straße 2
3300 Braunschweig

Braunschweig, 20.2.1981

Anwaltsakte: 240-23 EP-1

R O L L E I - W E R K E

Franke & Heidecke

GmbH & Co KG

Braunschweig

## Patentansprüche

1. Rundmagazin für Diarahmen mit einem Stator und einem Rotor sowie einem Zahnrad und einer Zahnung zum schrittweisen Drehen des Rotors mittels eines Diaschiebers, dadurch gekennzeichnet, daß der Stator (2) senkrecht zur Rotorachse symmetrisch befestigte Rotorlager (5, 5') in einem Winkel von weniger als $120^{\circ}$ bis minimal $30^{\circ}$ aufweist.

2. Rundmagazin nach Anspruch 1, dadurch gekennzeichnet, daß der Stator (2) Rotorlager (5, 5') mit Nuten (8) schräg zur Umfangsbewegungsrichtung der Rotoraußenzylinderwand (9) aufweist.

3. Rundmagazin nach Anspruch 1 und 2, gekennzeichnet durch Nylon-Rotorlager (5, 5').

4. Rundmagazin nach Anspruch 3, gekennzeichnet durch Polytetrafluoräthylen-beschichtete Rotorlager (5, 5').

5. Rundmagazin nach Anspruch 1-4, gekennzeichnet durch Polytetrafluoräthylen-beschichtete Innenflächen der Statorinnenzylinderwand (6) und der Statorwand (7).

6. Rundmagazin nach Anspruch 1-5, dadurch gekennzeichnet, daß Stator (2) und Rotorlager (5, 5') einteilig ausgebildet sind.

Patentanwälte
Gramm + Lins

0036492

Fig.1

120°<30°

Fig.2

5,5'

Europäisches
Patentamt

**EUROPÄISCHER RECHERCHENBERICHT**

0036492

Nummer der Anmeldung

EP 81 10 1253.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – B2 – 2 048 678 (J. WEBER) <br> * Fig. 1 * <br> — <br> US – A – 3 276 314 (H.T. ROBINSON) <br> * Spalte 4, Zeilen 34, 35; Fig. 4 * <br> — <br> DE – A – 1 547 325 (HONEYWELL) <br> * Fig. 5, 6 * <br> ———— | 1 <br><br><br> 1 <br><br><br> 1 |

**KLASSIFIKATION DER ANMELDUNG (Int. Cl.3)**

G 03 B 23/06

**RECHERCHIERTE SACHGEBIETE (Int. Cl.3)**

G 03 B 23/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort <br> Berlin | Abschlußdatum der Recherche <br> 29-06-1981 | Prüfer <br> HOPPE |
|---|---|---|

EPA form 1503.1 06.78